(19) Europäisches Patentamt

European Patent Office

Office européen des brevets

(11) EP 0 545 419 B1

## (12) EUROPEAN PATENT SPECIFICATION

(45) Date of publication and mention
of the grant of the patent:
**09.10.1996 Bulletin 1996/41**

(51) Int Cl.6: **G05D 13/62, H02P 7/628**

(21) Application number: **92120673.6**

(22) Date of filing: **03.12.1992**

(54) **Inverter unit and controlling method thereof**

Wechselrichter und Verfahren zu dessen Steuerung

Onduleur et la manière de la commander

(84) Designated Contracting States:
**DE GB**

(30) Priority: **04.12.1991 JP 320308/91**

(43) Date of publication of application:
**09.06.1993 Bulletin 1993/23**

(73) Proprietor: **MITSUBISHI DENKI KABUSHIKI KAISHA**
**Tokyo (JP)**

(72) Inventor: **Itoh, Tomotaka,**
**c/o Mitsubishi Denki K.K.**
**Higashi-ku, Nagoya (JP)**

(74) Representative:
**Bohnenberger, Johannes, Dr. et al**
**Meissner, Bolte & Partner**
**Postfach 86 06 24**
**81633 München (DE)**

(56) References cited:
**EP-A- 0 116 677**      **EP-A- 0 214 306**
**EP-A- 0 335 599**      **WO-A-91/03869**

## Description

The present invention relates to an inverter unit and a method of controlling said inverter unit which is equipped with acceleration and deceleration and accelerating and decelerating time setting means for setting the acceleration and deceleration and accelerating and decelerating time of an alternating-current motor.

An inverter unit generally allows that accelerating time from when an alternating-current motor as an object to be driven is at a stop until it reaches a preset velocity and decelerating time from the preset velocity to a stop to be set optionally.

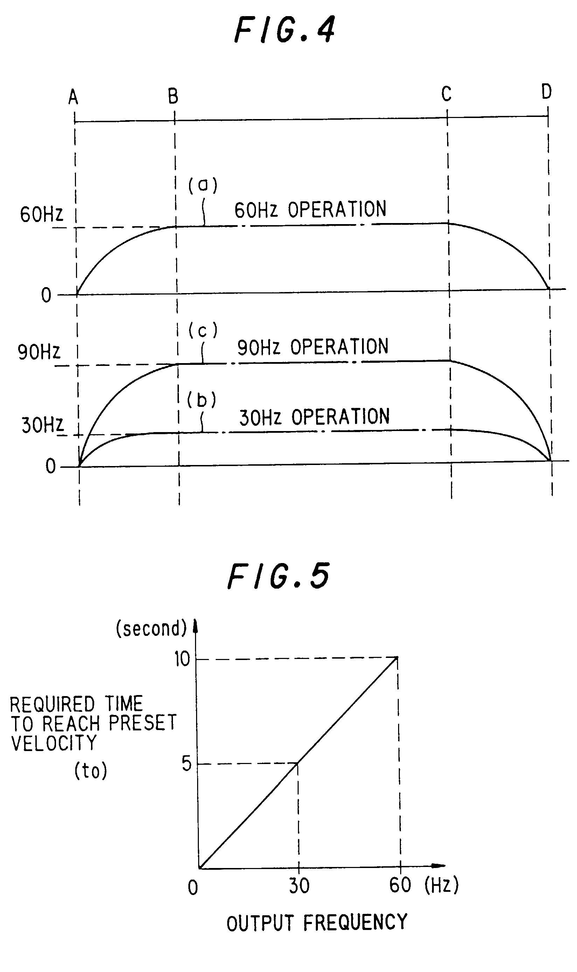

Said accelerating time and decelerating time are generally defined in relation to a reference preset velocity $V_s$. For example, if the reference preset velocity $V_s$ is set to 60Hz in inverter output frequency, the accelerating time of 10 seconds means time $t_{0a}$ required for the inverter output frequency to reach 60Hz from 0Hz. This also applies to the decelerating time. Hence, in case where a preset velocity $v_0$ has been set to half of the reference preset velocity $V_s$, i.e. 30Hz in inverter output frequency, the setting of accelerating time $t_{sa}$ to 10 seconds halves the required time $t_{0a}$ between 0Hz and 30Hz to 5 seconds. This condition is shown in Fig. 5.

As described above, the accelerating time $t_{sa}$ and decelerating time $t_{sd}$ are given in relation to the reference preset velocity $V_s$. By changing the preset velocity, therefore, the required time $t_{0a}$ until the preset velocity $V_0$ is reached or required time $t_{0d}$ from the preset velocity $v_0$ to a stop changes in proportion to the preset velocity $v_0$.

Running a truck by means of an inverter-driven alternating-current motor will now be described as an example. Now suppose a system wherein the truck comes and goes in a region of a definite distance and work is done by changing the constant running velocity of the truck. Assuming that the region where the truck must be run at a constant velocity has been predetermined, an acceleration-time travel until the truck reaches the preset velocity (constant velocity) $v_0$ and a deceleration-time travel until the truck decelerates from the preset velocity to a stop must naturally be definite. In the inverter of the prior art, however, a change in the preset velocity $v_0$ of the truck changes said acceleration-time travel and deceleration-time travel. As a result, the inverter in prior art is incompatible with said system.

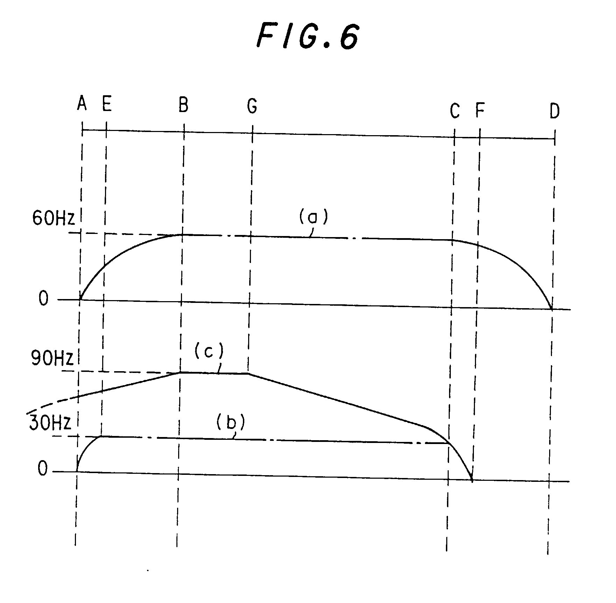

A specific example of incompatibility with said system is shown in Fig. 6. In Fig. 6, points A and B are stop position for the truck, A-D is a region $x_{ad}$ of a definite distance, B-C is where constant-velocity operation is requested, A-B is an accelerating movement region $x_a$, and C-D is a decelerating movement region $x_d$, each of $x_a$ and $x_d$ being 10cm. At points B and C, limit switches for example, necessary for a deceleration command are installed. The deceleration command is designed to be input to the inverter unit when the truck passes either of said points.

Now assume that the reference preset velocity $V_s$ is set to 60Hz in inverter output frequency, the accelerating time $t_{sa}$ to 10 seconds, and the decelerating time $t_{sd}$ to 10 seconds, and the moving velocity $V_s$ of the truck is 2cm/second at the inverter output frequency of 60Hz. For ease of explanation, it is supposed that the inverter is operated at uniform acceleration (acceleration $\alpha$ is constant).

Find a travel $x_s$ of the truck by setting the preset velocity $v_0$ of the truck to the reference preset velocity $V_s$ of the inverter, i.e. 60Hz is output frequency. As described above, assume that the acceleration-time travel in which the truck moves from the start of operation at the reference preset velocity $V_s$ to the completion of acceleration is defined as $x_{sa}$, the deceleration-time travel in which the truck moves from the receipt of a deceleration command to a stop is defined as $x_{sd}$, and $x_{sa}=x_{sd}=x_s$. In the following expression:

$$x_s = (1/2)\alpha t_s^2 \qquad (1)$$

acceleration is a constant value in the expression (1). Hence,

$$x_s = (1/2)v_s t_s \qquad (2)$$

When $v_s=2$(cm/sec) and $t_s=10$(sec) are assigned to the expression (2),

$$x_{sa}=x_{sd}=x_s=(1/2) \times 2(\text{cm/sec}) \times 10(\text{sec})=10(\text{cm})$$

This coincides with an operation pattern indicated by (a) and constant-velocity operation is performed between B-C at 60Hz, i.e. 2cm/sec.

Now find the travel of the truck where the accelerating and decelerating times $t_{sa}$ and $t_{sd}$ remain unchanged and the preset velocity $v_0$ of the truck is changed to 30Hz, i.e. 1cm/sec. In this case, the required time $t_{0a}$ until the preset velocity $v_0$ is reached and the required time $t_{0d}$ from the preset velocity $v_0$ to a stop are equal, a relationship between the preset velocity $v_0$ and the required time $t_0(t_0=t_{0a}=t_{0d})$ is:

$$t_0=(V_0/V_s)t_s \qquad (3)$$

according to Fig. 5.

And the following expression results according to the expression (3).

$$t_0=t_0=5(\text{sec})$$

Then, the assignment of $v_0=1$(cm/sec) and $t_0=5$

(sec) to the following expression (4):

$$x_0 = (1/2)v_0\, t_0 \qquad (4)$$

$$x_{0a} = x_{0d} = x_0 = 2.5cm$$

results in a pattern (b). In this case, whereas the truck runs at the constant velocity of 30Hz between E-C, it comes to a stop at point F because the deceleration command is entered at point C.

Then assume that the preset velocity $v_0$ of the truck is changed to 90Hz, i.e. $v_0 = 3$(cm/sec), and the truck returns in the opposite direction, starting at point F. In this case, the truck is run at $t_0 = (3/2)t_s = 15$(sec) and $x_0 = 22.5$ (cm) according to the expression (3), resulting in a pattern (c). Namely, the truck reaches 90Hz at point G and runs at constant velocity between B-G, but cannot come to stop at point A since it begins to decelerate from point B. One of the methods to solve this problem is to change the positions of the limit switches installed at points B and C according to the preset velocity of the truck. This, however, renders the system complicated, leading to higher costs.

The inverter unit in the prior art is constructed as describe above. Hence, when the velocity of the alternating-current motor, as an object to be controlled, during constant velocity operation, i.e. the set value of the present velocity, is changed, the number of revolutions of said alternating-current motor changes. For instance, where a truck is driven by said alternating-current motor, a change in the set value of the constant operating velocity of said truck changes the acceleration-time travel and deceleration-time travel, resulting in compatibility with an application wherein the constant-velocity operation region of said truck is preset. Although this may be solved by changing the limit switch positions according to a change in the set value of the constant operating velocity of said truck, the system will be complicated.

The European patent application EP-A-0 335 599 discloses a speed control unit for a PWM inverter. The control unit serves to control the slowing down length to make it constant by adjusting the slip frequency corresponding to the load torque, which is supplied as a result of detecting the current at a constant speed. In the slowing down, a voltage corresponding to the amount of the adjusted slip frequency is added without having to change the adjusted amount.

The international application WO91/03869 discloses a method of controlling the speed of an AC machine. The AC machine receives three output phases from a cyclo-converter which is connected to an input supply of frequency $f_1$. The cyclo-converter is caused to operate in three modes under control of a microprocessor. The first mode supplies the AC machine in the frequency range 0 to $f_0$, by conventional cyclo-converting to generate a near continuum of frequencies. The second mode operates the cyclo-converter to synthesize a number of frequency steps in the frequency range $f_0$ to $f_1$ from the input supply and provides speed control of the AC machine by phase control of the output voltage. The third mode operates the cyclo-converter to be transparent, such that the input frequency $f_1$ is effectively directly supplied to the AC machine without speed regulation being applied.

It is the object of the present invention to provide an inverter unit and a controlling method thereof which allows a vehicle to stop at defined positions independent of the speed setting for the vehicle, while also providing a simple construction.

According to the present invention, an inverter unit is provided as defined in either Claim 1 or Claim 3. The inverter units comprise processing means related to the acceleration and deceleration phases, respectively.

Further according to the present invention, a method of controlling an inverter is provided as defined in Claim 6 or Claim 8. The methods refer to control of the inverter in the acceleration and the deceleration phases respectively.

Other objects of this invention will become understood from the following description of embodiments with reference to the accompanying drawings.

Fig. 1 is a block diagram showing the structure of a control circuit in an inverter unit according to a preferred embodiment of the present invention.

Fig. 2 is a flow chart showing an operation of the inverter unit according to the preferred embodiment of the present invention.

Fig. 3 is a view showing a relationship between the output frequency and required preset velocity reaching time of the inverter unit according to the preferred embodiment of the present invention.

Fig. 4 is a view showing a relationship between the travel and moving velocity of an object to be controlled via an alternating-current motor by the inverter unit according to the preferred embodiment of the present invention.

Fig. 5 is a view showing a relationship between the output frequency and required preset velocity reaching time of an inverter unit known in the prior art.

Fig. 6 is a view showing a relationship between the travel and moving velocity of an object to be controlled via an alternating-current motor by the inverter unit known in the prior art.

## DESCRIPTION OF THE PREFERRED EMBODIMENTS

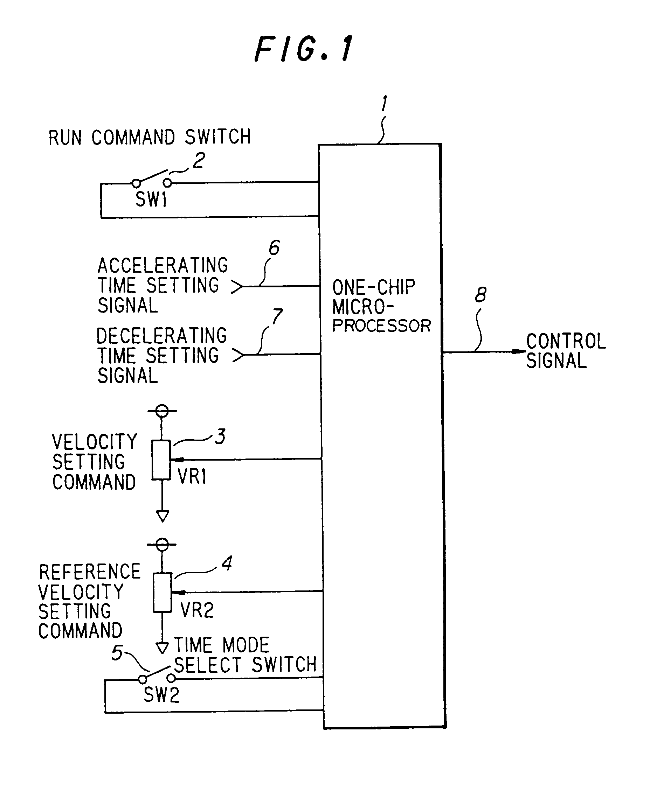

An embodiment of the present invention will now be described with reference to Figs. 1 to 4, wherein reference characters identical to those in the prior art designate identical or corresponding parts.

An inverter unit in the present embodiment is designed to automatically change the accelerating time and decelerating time of an alternating-current motor, as an object to be controlled, in response to a preset velocity.

That is, accelerating time $t_{sa}$ and decelerating time $t_{sd}$ of said alternating-current motor is changed in response to the preset velocity of the inverter unit. The accelerating time $t_{sa}$ and decelerating time $t_{sd}$ are increased when the preset velocity $v_0$ is low (slow) and the accelerating time $t_{sa}$ and decelerating time $t_{sd}$ are decreased when the preset velocity $v_0$ is high (first), thereby keeping an acceleration-time travel $x_{0a}$ and a deceleration-time travel $x_{0d}$ constant, i.e. rendering an acceleration-time travel $x_{sa}$ and a deceleration-time travel $x_{sd}$ at a reference preset velocity $V_s$ equal.

Fig. 1 shows part of the control circuit of the inverter unit, wherein the reference numeral 1 denotes a one-chip microprocessor, numeral 2 denotes a first switch (hereinafter referred to as "SW1") for entering a run command into the one-chip microprocessor 1 when set to ON, numeral 3 denotes a variable resistor (hereinafter referred to as "VR1") for entering a velocity setting command to the one-chip microprocessor 1, namely for entering the preset velocity $v_0$, numeral 4 denotes a variable resistor (hereinafter referred to as "VR2") for entering a reference velocity setting command, namely for entering the reference preset velocity $V_s$ and numeral 5 a second switch (hereinafter referred to as "SW2") for giving a time mode select signal to the one-chip microprocessor 1 when set to ON. The accelerating and decelerating time processing method is according to the prior art is selected, when "SW2"5 is sit to OFF the accelerating and decelerating time processing method according to the present embodiment is selected, when "SW2"5 is set to ON.

The reference numeral 6 denotes a terminal for inputting an accelerating time setting signal according to the accelerating time which is set in the one-chip microprocessor 1, numeral 7 denotes a terminal for inputting an decelerating time setting signal according to the decelerating time $t_{sd}$ which is set in the one-chip microprocessor 1, numeral 8 denotes a control signal output terminal of the one-chip microprocessor 1.

The one-chip microprocessor 1 contains a CPU, a memory for storing programs, and others. When said CPU reads and executes a program stored in said memory, the one-chip microprocessor 1 generates a function serving as acceleration and accelerating time setting means which sets the acceleration and accelerating time of an alternating-current motor (not shown), as an object to be controlled by the inverter unit, from when said alternating-current motor is at a stop to when it reaches a preset velocity and, a function acting as deceleration and decelerating time setting means which sets the deceleration and decelerating time of said alternating-current motor from said preset velocity to a stop.

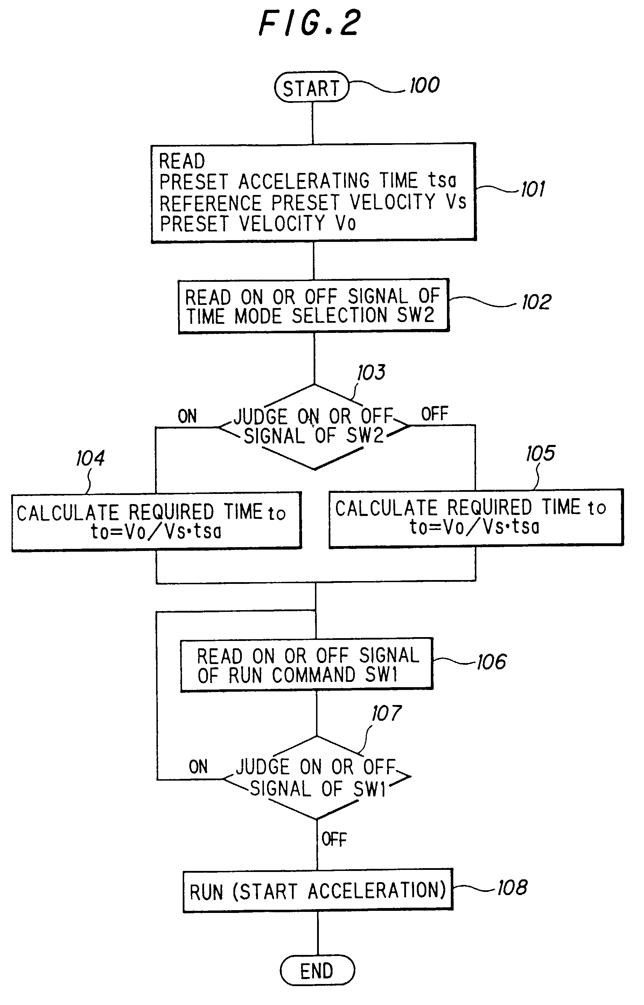

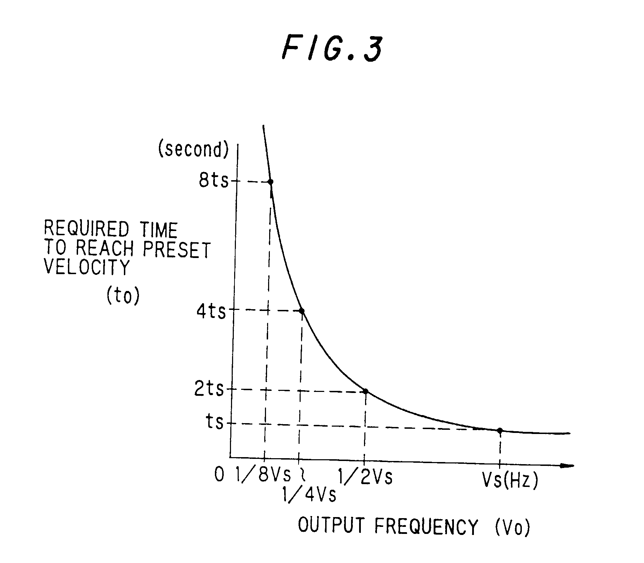

Fig. 2 is a flow chart showing an operation of the present embodiment, Fig. 3 is a view showing a relationship between an output frequency and time required to reach the preset velocity in the inverter unit of the present embodiment.

As describe in the prior art, the travel $x_s$ at the reference preset velocity $V_s$ and accelerating and decelerating time $t_s$ is represented as follows since the acceleration is constant and the initial velocity is zero, i.e. the motor is at a stop and in accordance with the preset velocity $v_0 = V_s$, is:

$$x_s = (1/2)V_s t_s \qquad (2)$$

$x_0$ is represented by the following expression:

$$x_0 = (1/2)v_0 t_0 \qquad (4)$$

According to said Expressions (2) and (4), therefore, if the preset velocity $v_s$ is changed to $v_0$, the required acceleration and deceleration time to make the travel $x_0$ at $v_0$ constant ($x_s$), i.e. preset velocity reaching time $t_0$, is as follows:

$$t_0 = v_s \cdot t_s/v_0 = (v_s/v_0)t_s \qquad (5)$$

which indicates that the preset velocity reaching time $t_0$ may be set in indirect proportion to the output frequency.

Suppose that the accelerating time and decelerating time are defined as given in relation to the reference preset velocity $v_s$ as in the prior art, and the reference preset velocity $v_s$ is set to 60Hz in inverter output frequency and the accelerating and decelerating time to 10 seconds. Since a characteristic in Fig. 3 is provided in 20 seconds at, for instance, 30Hz, it will be provided in 40 seconds at 60Hz according to the prior art concept.

Namely, supposing that the reference preset velocity is $v_s$, preset time in relation to the reference velocity $v_s$ is $t_s$, a new preset velocity is $v_0$, time required to reach the new preset velocity $v_0$ is $t_0$, and preset time in relation to the reference velocity $v_s$ at the new preset velocity of $v_0$ is $t_1$:

$$t_1 = (v_s/v_0)t_0 \qquad (6)$$

According to said expressions (5) and (6),

$$t_1 = (v_s/v_0)^2 t_s \qquad (7)$$

As above, the preset time $t_1$ is calculated as the integrating value of rotation of an alternating-current motor coincides with the integrating value of rotation corresponding to the reference preset velocity $V_s$ and the preset time $t_s$, even though voluntary preset velocity $v_0$

is set.

That is, in the prior art unit and method, the time $t_0$ reach the new preset velocity $v_0$ is:

$$t_0=(v_0/v_s)t_{sa} \qquad (3)$$

which poses a problem. By giving new preset time $t_1$ according to the expression (7), however, the added-up velocity value of the alternating-current motor controlled by the inverter unit is kept constant if the preset velocity $v_0$ of the inverter unit is changed, whereby the problems in the prior art unit and method can be resolved.

Since the operating principle of the inverter unit is a matter of common knowledge, only fundamental operation procedure required to explain the present invention will now be described. In the present embodiment, a run command, an accelerating time command, a decelerating time command a reference velocity setting command and a velocity setting command are entered into the one-chip microprocessor 1 employed in the control circuit. The microprocessor 1 carries out necessary operation on the basis of said command and outputs to an inverter circuit (not shown) of the inverter unit a control signal required to generate an alternating-current power of variable voltage and variable frequency.

The velocity setting command and the reference velocity setting command are ordinarily inputted by the user of the inverter unit, in Fig. 1, the velocity setting command, namely, the preset velocity $v_0$ is set through "VR1" 3, and the reference velocity setting command, namely, the reference preset velocity $V_s$ is set through "VR2"4, and determines the running frequency of the inverter unit. The accelerating time command and decelerating time command set accelerating time $t_{sa}$ and decelerating time $t_{sd}$, the above commands are inputted respectively through the terminal 6 and the terminal 7. And the above commands may either be entered through variable resistors as in the velocity setting command or in the form of digital signals.

"SW1" 2 is a run command switch. When this "SW1" 2 is set to ON, acceleration is made for a period of preset accelerating time up to a velocity set by "VR1" 3. When "SW1" 2 is set to OFF during run, deceleration is made for a period of preset decelerating time until a stop is effected. "SW2" 5 is a time mode select switch. When this switch is set to OFF, the inverter unit is set to an accelerating and decelerating time setting mode as in the prior art. When "SW2" 5 is set to ON, the inverter unit is set to a mode of the present invention, i.e. the accelerating time and decelerating time of the alternating-current motor as an object to be controlled are automatically changed in response to the preset velocity.

Now the operation to set an acceleration time will be describe in accordance with the flow chart shown in Fig. 2. In Fig. 2, at step 100, operation starts and it is confirmed that the truck (not shown) which is driven by the above alternating-current motor is at a stop. At step 101, preset acceleration time $t_{sa}$, reference velocity setting command, i.e., reference preset velocity $V_s$ and velocity setting command, i.e., preset velocity $V_0$ are read. Furthermore at step 102, ON or OFF signal selection of time mode selection "SW2" 5 is read.

Next, at step 103, "SW2" 5 signal is judged, if it is OFF, at step 104, $t_0$ ($t_0=(v_0/V_s)t_{sa}$) time required to accelerate is calculated just like the way the inverter unit known in the art does. Calculation at step 104 corresponds to the graph shown in Fig. 5, and required time $t_0$ which was gained by the calculation is in proportion to velocity setting command $v_0$. If "SW2" 5 signal is ON at step 103, $t_0$ ($t_0=(V_s/V_0)t_{sa}$)time required to accelerate, based on this invention is calculated at step 105. Calculation at step 105 corresponds to the graph shown in Fig. 3 and required time $t_0$ which was obtained by the calculation is inversely proportional to velocity setting command $v_0$.

Next, at step 106, operation command signal which is a ON or OFF signal of "SW1" 4 is read. Since it is confirmed that the truck (not shown) is currently at stop, that is, since it is confirmed that "SW1" 4 is OFF at step 100, it is judged if OFF signal of "SW1" 4 has been changed to be ON signal at step 107. If it has been changed to be ON signal, the inverter unit will start an operation (acceleration) of alternating current motor (not shown) at step 108. Namely, microprocessor 1 outputs a control signal which obtains increasing velocity from terminal 8 based on the following expression (8)

$$\Delta dv=(v_0/t_0)\, \Delta t \qquad (8)$$

$\Delta t$ shows a minute time determined by velocity processing resolution of microprocessor 1 in the expression (8).

If "SW2" 5 is OFF at step 103 in the conventional mode, the following expression applies.

$$\Delta v=(v_0/t_0)\, \Delta t=(V_s/t_{sa})\Delta t \qquad (8)$$

But in the mode of this invention, the following expression applies.

$$\Delta v=(v_0/t_0)\, \Delta t=(V_s/t_1)\Delta t \qquad (9)$$

Here $t_1$ is hypothetical required time to reach preset reference velocity $V_s$ when alternating current motor (not shown) is run (accelerated) with and acceleration to reach preset velocity $v_0$ in required time to, and the relation between the hypothetical required time $t_1$ and preset acceleration time $t_{sa}$ is given by the expression (7).

In Fig. 1, microprocessor 1 is equipped both with velocity setting command, i.e., "VR1" 3 as a velocity setting command input means to input preset velocity $v_0$ and "VR2" 4 as to reference velocity setting command input means to input preset reference velocity $V_s$. Since users can easily change or set preset reference velocity $V_s$ because of "VR2" 4 velocity setting of the truck in accordance with the drive conditions of a truck (not shown) for example, driven by the alternating current motor, an object to be controlled is easily done. Also setting of travel distance (integrating value of rotation) at the time of acceleration and deceleration is now extremely easy.

Fig. 4 is a diagram corresponding to Fig. 6 for the prior art and showing that where the load of the alternating-current motor as an object to be controlled by the inverter unit is a truck, said truck comes and goes in a region $x_{ad}$ of a definite distance. Referring to Fig. 4, if the preset velocity $v_0$ of the inverter unit is changed, i. e. the output frequency of 60Hz corresponding to the reference preset velocity $v_0$ is changed to 30Hz or 90Hz, the accelerating time and decelerating time are automatically operated on and adjusted to keep an acceleration-time travel $x_{0a}$ and a deceleration-time travel $x_{0d}$ constant ($x_s$). Hence, when said truck comes and goes in the definite-distance region $x_{ad}$, the accelerating movement travel $x_{0a}$ and decelerating movement travel $x_{0d}$ coincide with an acceleration-time moving region $x_a$ and a deceleration-time moving region $x_d$, respectively, as shown in modes (a), (b) and (c). As described above, the inverter unit can be employed for any application wherein the acceleration-time travel and deceleration-time travel of a truck coming and going in a definite region are restricted.

An inverter unit and an inverter unit controlling method are provided that allow the acceleration and deceleration-time travel to be kept constant if the set value of the preset velocity of an object to be driven by an alternating-current motor is changed. Acceleration and deceleration and accelerating and decelerating time are operated on and set automatically so that the added-up velocity value of said alternating-current motor from when it is at a stop to when it reaches the preset velocity or from said preset velocity to a stop is kept constant if the set value of said preset velocity is changed.

The inverter unit has reference velocity setting command input means for inputting reference preset velocity as to reference velocity setting command so that users can easily change or set reference preset velocity, and setting operation of velocity and integrating value of rotation of an alternating-current motor at the time acceleration and deceleration in accordance with the drive condition is now extremely easy.

**Claims**

1.  An inverter unit for converting a direct current into an alternating current of variable frequency and variable voltage, for outputting the alternating current, and for running an alternating-current motor at variable velocity, comprising: acceleration processing means (1) for processing acceleration of said alternating-current motor from when it is at a stop position until it reaches a pre-set velocity during an accelerating time; and means (3) for inputting the desired pre-set velocity as a velocity setting command characterised by
acceleration time setting means (1) for automatically setting said accelerating time for said alternating-current motor so that the integrated value of the rotation of said alternating-current motor from said stop position until it reaches said pre-set velocity is the same as the integrated value of the rotation from said stop position to a pre-set reference velocity and for outputting said acceleration time to said acceleration processing means (1).

2.  An inverter unit according to claim 1, further characterised by: deceleration processing means (1) for processing deceleration of said alternating-current motor from said preset velocity to a second stop position during a decelerating time; and deceleration time setting means (1) for automatically setting said decelerating time for said alternating-current motor so that the integrated value of the rotation of said alternating-current motor during deceleration from said pre-set velocity to said second stop position is the same as the as the integrated value of rotation during deceleration from said reference pre-set velocity to said second stop position and for outputting said deceleration time to said deceleration processing means (1).

3.  An inverter unit for converting a direct current into an alternating current of variable frequency and variable voltage, for outputting the alternating current, and for running an alternating-current motor at variable velocity, comprising: deceleration processing means (1) for processing deceleration of said alternating-current motor from a pre-set velocity to a stop position during a deceleration time; and means (3) for inputting the desired pre-set velocity as a velocity setting command; characterised by deceleration time setting means (1) for automatically setting said decelerating time for said alternating-current motor so that the integrated value of the rotation of said alternating-current motor during deceleration from said pre-set velocity to said stop position is the same as the integrated value of the rotation during deceleration from a reference pre-set velocity to said stop position, and for outputting said deceleration time to said deceleration processing means (1).

4.  An inverter unit according to any of claims 1 to 3, further characterised by: means (4) for setting said reference pre-set velocity as a reference pre-set velocity command.

5. An inverter unit according to any of claims 1 to 4, characterised in that said acceleration or deceleration time t1 is defined by

$$t1 = (Vs/Vo)2.ts$$

where Vo is the pre-set velocity, Vs is the pre-set reference velocity and ts is the acceleration or deceleration time respectively when the pre-set velocity is the same as the preset reference voltage.

6. A method of controlling an inverter unit which converts a direct current into an alternating current of variable frequency and variable voltage and outputs the alternating current for running an alternating-current motor at variable velocity, comprising the steps of:

     processing acceleration of said alternating-current motor from when it is at a stop position until it reaches a pre-set velocity during an accelerating time;

     inputting the desired pre-set velocity as a velocity setting command;

     setting said accelerating time for said alternating-current motor so that independent of the integrated value of the rotation of said alternating-current motor from said stop position until it reaches said pre-set velocity is the same as the integrated value of the rotation from said stop position to a pre-set reference velocity.

7. A method of controlling an inverter unit according to claim 6, further comprising the steps of:

     processing deceleration of said alternating-current motor from when it is at said pre-set velocity until it reaches a second stop position during a decelerating time; and

     setting said decelerating time so that the integrated value of the rotation of said alternating-current motor during deceleration from said pre-set velocity to said second stop position is the same as the integrated value of the rotation. on during deceleration from said pre-set reference velocity to said second stop position.

8. A method of controlling an inverter unit which converts a frequency and variable voltage and outputs the alternating current for running an alternating-current motor at variable velocity, comprising the steps of:

processing deceleration of said alternating-current motor from when it is at a pre-set velocity until it reaches a stop position during a decelerating time;

     inputting the desired pre-set velocity as a velocity setting command;

     setting said decelerating time for said alternating-current motor so that the integrated value of the rotation of said alternating-current motor during deceleration from said pre-set velocity until it reaches said stop position is the same as the integrated value of the rotation during deceleration from a pre-set reference velocity to said stop position.

9. A method of controlling an inverter unit according any of claims 6 to 8, further comprising the step of:

     setting said acceleration or decelerating time tl to the value defined by:

$$t1 = (Vs/Vo)2.ts$$

     where Vo is the pre-set velocity, Vs is the pre-set reference velocity and ts is the acceleration or deceleration time respectively when the pre-set velocity is the same as the preset reference velocity.

**Patentansprüche**

1. Wechselrichtereinheit zum Umrichten eines Gleichstroms in einen Wechselstrom veränderlicher Frequenz und veränderlicher Spannung, um den Wechselstrom abzugeben und um einen Wechselstrommotor mit veränderlicher Geschwindigkeit zu betreiben, wobei die Wechselrichtereinheit folgendes aufweist: eine Hochlauf-Verarbeitungseinrichtung (1), um das Hochlaufen des Wechselstrommotors von dem Zeitpunkt, zu dem er in einer Haltposition ist, bis zum Erreichen einer Voreinstellgeschwindigkeit während einer Hochlaufzeit zu verarbeiten; und eine Einrichtung (3), um die gewünschte Voreinstellgeschwindigkeit als einen Geschwindigkeits-Vorgabebefehl einzugeben, gekennzeichnet durch eine Hochlaufzeit-Vorgabeeinrichtung (1), um die Hochlaufzeit für den Wechselstrommotor automatisch so vorzugeben, daß der Integralwert der Rotation des Wechselstrommotors aus der Haltposition bis zum Erreichen der Voreinstellgeschwindigkeit gleich wie der Integralwert der Rotation aus der Haltposition bis zu einer Referenz-Voreinstellgeschwindigkeit ist, und um die Hochlaufzeit an die Hochlauf-Verarbeitungseinrichtung (1) abzugeben.

2. Wechselrichtereinheit nach Anspruch 1, ferner gekennzeichnet durch: eine Auslauf-Verarbeitungseinrichtung (1), um das Auslaufen des Wechselstrommotors von der Voreinstellgeschwindigkeit in eine zweite Haltposition während einer Auslaufzeit zu verarbeiten; und eine Auslaufzeit-Vorgabeeinrichtung (1), um die Auslaufzeit für den Wechselstrommotor automatisch so vorzugeben, daß der Integralwert der Rotation des Wechselstrommotors während des Auslaufens von der Voreinstellgeschwindigkeit in die zweite Haltposition gleich wie der Integralwert der Rotation während des Auslaufens von der Referenz-Voreinstellgeschwindigkeit zu der zweiten Haltposition ist, und um die Auslaufzeit an die Auslauf-Verarbeitungseinrichtung (1) abzugeben.

3. Wechselrichtereinheit zum Umrichten eines Gleichstroms in einen Wechselstrom veränderlicher Frequenz und veränderlicher Spannung, um den Wechselstrom abzugeben und um einen Wechselstrommotor mit veränderlicher Geschwindigkeit zu betreiben, wobei die Wechselrichtereinheit aufweist: eine Auslauf-Verarbeitungseinrichtung (1), um ein Auslaufen des Wechselstrommotors von einer Voreinstellgeschwindigkeit zu einer Haltposition während einer Auslaufzeit zu verarbeiten; und eine Einrichtung (3) zum Eingeben der gewünschten Voreinstellgeschwindigkeit als einen Geschwindigkeits-Vorgabebefehl; gekennzeichnet durch eine Auslaufzeit-Vorgabeeinrichtung (1), um die Auslaufzeit für den Wechselstrommotor automatisch so vorzugeben, daß der Integralwert der Rotation des Wechselstrommotors während des Auslaufens von der Voreinstellgeschwindigkeit zu der Haltposition gleich wie der Integralwert der Rotation während des Auslaufens von einer Referenz-Voreinstellgeschwindigkeit zu der Haltposition ist, und um die Auslaufzeit an die Auslauf-Verarbeitungseinrichtung (1) abzugeben.

4. Wechselrichtereinheit nach einem der Ansprüche 1 bis 3 ferner gekennzeichnet durch: eine Einrichtung (4), um die Referenz-Voreinstellgeschwindigkeit als einen Referenz-Voreinstellgeschwindigkeitsbefehl vorzugeben.

5. Wechselrichtereinheit nach einem der Ansprüche 1 bis 4, dadurch gekennzeichnet, daß die Hochlauf- oder Auslaufzeit t1 definiert ist durch

$$t1 = (Vs/Vo)2.ts$$

wobei Vo die Voreinstellgeschwindigkeit, Vs die Referenz-Voreinstellgeschwindigkeit und ts die Hochlauf-bzw. Auslaufzeit ist, wenn die Voreinstellgeschwindigkeit gleich wie die Referenz-Voreinstellgeschwindigkeit ist.

6. Verfahren zum Steuern einer Wechselrichtereinheit, die einen Gleichstrom in einen Wechselstrom mit veränderlicher Frequenz und veränderlicher Spannung umrichtet und den Wechselstrom abgibt, um einen Wechselstrommotor mit veränderlicher Geschwindigkeit zu betreiben, wobei das Verfahren die folgenden Schritte aufweist:

Verarbeiten des Hochfahrens des Wechselstrommotors ab dem Zeitpunkt, zu dem er in einer Haltposition ist, bis er eine Voreinstellgeschwindigkeit während einer Hochfahrzeit erreicht;

Eingeben der gewünschten Voreinstellgeschwindigkeit als einen Geschwindigkeits-Vorgabebefehl;

Vorgeben der Hochfahrzeit für den Wechselstrommotor, so daß sie unabhängig von dem Integralwert der Rotation des Wechselstrommotors von der Haltposition bis zum Erreichen der Voreinstell-Geschwindigkeit gleich wie der Integralwert der Rotation von der Haltposition zu einer Referenz-Voreinstellgeschwindigkeit ist.

7. Verfahren zum Steuern einer Wechselrichtereinheit nach Anspruch 6, das ferner die folgenden Schritte aufweist:

Verarbeiten des Auslaufens des Wechselstrommotors ab dem Zeitpunkt, zu dem er die Voreinstellgeschwindigkeit hat, bis er eine zweite Haltposition während einer Auslaufzeit erreicht; und

Vorgeben der Auslaufzeit so, daß der Integralwert der Rotation des Wechselstrommotors während des Auslaufens von der Voreinstellgeschwindigkeit zu der zweiten Haltposition gleich wie der Integralwert der Rotation während des Auslaufens von der Referenz-Voreinstellgeschwindigkeit bis zu der zweiten Haltposition ist.

8. Verfahren zum Steuern einer Wechselrichtereinheit, die einen Gleichstrom in einen Wechselstrom veränderlicher Frequenz und veränderlicher Spannung umrichtet und den Wechselstrom abgibt, um einen Wechselstrommotor mit veränderlicher Geschwindigkeit zu betreiben, wobei das Verfahren folgende Schritte aufweist:

Verarbeiten eines Auslaufens des Wechselstrommotors ab dem Zeitpunkt, zu dem er eine Voreinstellgeschwindigkeit hat, bis er eine Haltposition während einer Auslaufzeit erreicht;

Eingeben der gewünschten Voreinstellgeschwindigkeit als einen Geschwindigkeits-Vorgabebefehl;

Vorgeben der Auslaufzeit für den Wechselstrommotor so, daß der Integralwert der Rotation des Wechselstrommotors während des Auslaufens von der Voreinstellgeschwindigkeit bis zum Erreichen der Haltposition gleich wie der Integralwert der Rotation während des Auslaufens von einer Referenz-Voreinstellgeschwindigkeit zu der Haltposition ist.

9. Verfahren zum Steuern einer Wechselrichtereinheit nach einem der Ansprüche 6 bis 8, das ferner folgende Schritte aufweist:

Vorgeben der Hochfahr- oder Auslaufzeit t1auf den Wert, der definiert ist durch:

$$t1 = (Vs/Vo)2.ts$$

wobei Vo die Voreinstellgeschwindigkeit, Vs die Referenz-Voreinstellgeschwindigkeit und ts die Hochfahr-bzw. Auslaufzeit ist, wenn die Voreinstellgeschwindigkeit gleich wie die Referenz-Voreinstellgeschwindigkeit ist.

## Revendications

1. Onduleur pour convertir un courant continu en un courant alternatif de fréquence variable et de tension variable, pour ; délivrer le courant alternatif et pour faire fonctionner un moteur à courant alternatif à une vitesse variable, comprenant : des moyens de traitement de l'accélération (1) pour traiter une accélération dudit moteur à courant alternatif depuis le moment où il se trouve à une position d'arrêt jusqu'à ce qu'il atteigne une vitesse prédéterminée pendant un temps d'accélération; et des moyens (3) pour entrer la vitesse prédéterminée désirée comme ordre de fixation de la vitesse, caractérisé par des moyens de fixation du temps d'accélération (1) pour fixer automatiquement ledit temps d'accélération pour ledit moteur à courant alternatif de telle sorte que la valeur intégrée de la rotation dudit moteur à courant alternatif depuis ladite position d'arrêt jusqu'à ce qu'il atteigne ladite vitesse prédéterminée soit la même que la valeur intégrée de la rotation depuis ladite position d'arrêt jusqu'à une vitesse de référence prédéterminée et pour délivrer ledit temps d'accélération auxdits moyens de traitement de l'accélération (1).

2. Onduleur selon la revendication 1, caractérisé en outre par : des moyens de traitement de la décélération (1) pour traiter une décélération dudit moteur à courant alternatif depuis ladite vitesse prédéterminée jusqu'à une deuxième position d'arrêt pendant un temps de décélération; et des moyens de fixation du temps de décélération (1) pour fixer automatiquement ledit temps de décélération pour ledit moteur à courant alternatif de façon que la valeur intégrée de la rotation dudit moteur à courant alternatif pendant la décélération depuis ladite vitesse prédéterminée jusqu'à ladite deuxième position d'arrêt soit la même que la valeur intégrée de la rotation pendant la décélération depuis ladite vitesse de référence prédéterminée jusqu'à ladite deuxième position d'arrêt et pour délivrer ledit temps de décélération auxdits moyens de traitement de la décélération (1).

3. Onduleur pour convertir un courant continu en un courant alternatif de fréquence variable et de tension variable, pour délivrer le courant alternatif et pour faire fonctionner un moteur à courant alternatif à une vitesse variable, comprenant : des moyens de traitement de la décélération (1) pour traiter une décélération dudit moteur à courant alternatif depuis une vitesse prédéterminée jusqu'à une position d'arrêt pendant un temps de décélération; et des moyens (3) pour entrer la vitesse prédéterminée désirée en tant qu'ordre de fixation de la vitesse, caractérisé par des moyens de fixation du temps de décélération (1) pour fixer automatiquement ledit temps de décélération pour ledit moteur à courant alternatif de façon que la valeur intégrée de la rotation dudit moteur à courant alternatif lors de la décélération depuis ladite vitesse prédéterminée jusqu'à ladite position d'arrêt soit la même que la valeur intégrée de la rotation lors d'une décélération depuis une vitesse de référence prédéterminée jusqu'à ladite position d'arrêt, et pour délivrer ledit temps de décélération auxdits moyens de traitement de la décélération (1).

4. Onduleur selon l'une des revendications 1 à 3, caractérisé en outre par : des moyens (4) pour fixer ladite vitesse de référence prédéterminée comme ordre de vitesse de référence prédéterminée.

5. Onduleur selon l'une des revendications 1 à 4, caractérisé en ce que ledit temps d'accélération ou de décélération t1 est défini par :

$$t_1 = (V_s/V_0)^2.ts$$

où $V_0$ est la vitesse prédéterminée, $V_s$ est la vitesse de référence prédéterminée et ts est le temps d'accélération ou de décélération respectivement lorsque la vitesse prédéterminée est la même que la tension (vitesse) de référence prédéterminée.

6. Procédé pour commander un onduleur qui convertit un courant continu en un courant alternatif de fréquence variable et de tension variable et délivre le courant alternatif pour faire fonctionner un moteur à courant alternatif à une vitesse variable, comprenant les étapes suivantes :

traiter une accélération dudit moteur à courant alternatif depuis le moment où il se trouve à une position d'arrêt jusqu'à ce qu'il atteigne une vitesse prédéterminée pendant un temps d'accélération;

entrer la vitesse prédéterminée désirée comme ordre de fixation de la vitesse;

fixer ledit temps d'accélération pour ledit moteur à courant alternatif de façon que de manière indépendante (du réglage de vitesse) la valeur intégrée de la rotation dudit moteur à courant alternatif depuis ladite position d'arrêt jusqu'à ce qu'il atteigne ladite vitesse prédéterminée soit la même que la valeur intégrée de la rotation depuis ladite position d'arrêt jusqu'à une vitesse de référence prédéterminée.

7. Procédé pour commander un onduleur selon la revendication 6, comprenant en outre les étapes suivantes :

traiter une décélération dudit moteur à courant alternatif depuis le moment où il se trouve à ladite vitesse prédéterminée jusqu'à ce qu'il atteigne une deuxième position d'arrêt pendant un temps de décélération; et

fixer ledit temps de décélération de façon que la valeur intégrée de la rotation dudit moteur à courant alternatif lors de la décélération depuis ladite vitesse prédéterminée jusqu'à ladite deuxième position soit la même que la valeur intégrée de la rotation lors de la décélération depuis ladite vitesse de référence prédéterminée jusqu'à ladite deuxième position d'arrêt.

8. Procédé pour commander un onduleur qui convertit une fréquence et une tension variables et délivre le courant alternatif pour faire fonctionner un moteur à courant alternatif à une vitesse variable, comprenant les étapes suivantes :

traiter une décélération dudit moteur à courant alternatif depuis le moment où il est à une vitesse prédéterminée jusqu'à ce qu'il atteigne une position d'arrêt pendant un temps de décélération;

entrer la vitesse prédéterminée désirée comme ordre de fixation de la vitesse;

fixer ledit temps de décélération pour ledit moteur à courant alternatif de façon que la valeur intégrée de la rotation dudit moteur à courant alternatif pendant une décélération depuis ladite vitesse prédéterminée jusqu'à ce qu'il atteigne ladite position d'arrêt soit la même que la valeur intégrée de la rotation pendant la décélération depuis une vitesse de référence prédéterminée jusqu'à ladite position d'arrêt.

9. Procédé pour commander un onduleur selon l'une des revendications 6 à 8, comprenant en outre l'étape suivante :

fixer ledit temps d'accélération ou de décélération ($t_1$) à la valeur définie par :

$$t_1 = (V_s/V_0)^2 . ts$$

où $V_0$ est la vitesse prédéterminée, $V_s$ est la vitesse de référence prédéterminée et ts est le temps d'accélération ou de décélération respectivement lorsque la vitesse prédéterminée est la même que la vitesse de référence prédéterminée.

# FIG. 1

RUN COMMAND SWITCH

2

SW1

ONE-CHIP
MICRO-
PROCESSOR

1

ACCELERATING
TIME SETTING
SIGNAL

6

DECELERATING
TIME SETTING
SIGNAL

7

8

CONTROL
SIGNAL

VELOCITY
SETTING
COMMAND

3

VR1

REFERENCE
VELOCITY
SETTING
COMMAND

4

VR2

5

TIME MODE
SELECT SWITCH

SW2

11

# FIG.2

START — 100

READ
PRESET ACCELERATING TIME tsa
REFERENCE PRESET VELOCITY Vs
PRESET VELOCITY Vo — 101

READ ON OR OFF SIGNAL OF
TIME MODE SELECTION SW2 — 102

103
ON — JUDGE ON OR OFF SIGNAL OF SW2 — OFF

104
CALCULATE REQUIRED TIME to
$to = Vo/Vs \cdot tsa$

105
CALCULATE REQUIRED TIME to
$to = Vo/Vs \cdot tsa$

READ ON OR OFF SIGNAL
OF RUN COMMAND SW1 — 106

107
ON — JUDGE ON OR OFF SIGNAL OF SW1
OFF

RUN (START ACCELERATION) — 108

END

# FIG.3

# FIG.4

A  B  C  D

(a)
60Hz — 60Hz OPERATION
0

(c)
90Hz — 90Hz OPERATION

(b)
30Hz — 30Hz OPERATION
0

# FIG.5

(second)

REQUIRED TIME
TO REACH PRESET
VELOCITY
(to)

10

5

0          30    60  (Hz)

OUTPUT FREQUENCY

# FIG.6